(19) Europäisches Patentamt
European Patent Office
Office européen des brevets

(11) Veröffentlichungsnummer: **0 269 987 B1**

(12) **EUROPÄISCHE PATENTSCHRIFT**

(45) Veröffentlichungstag der Patentschrift: **07.08.91**

(51) Int. Cl.5: **C08F 10/00**, C08F 4/642

(21) Anmeldenummer: **87117381.1**

(22) Anmeldetag: **25.11.87**

# (54) Verfahren zur Herstellung eines 1-Olefin-Stereoblockpolymers.

(30) Priorität: **29.11.86 DE 3640948**

(43) Veröffentlichungstag der Anmeldung:
**08.06.88 Patentblatt 88/23**

(45) Bekanntmachung des Hinweises auf die Patenterteilung:
**07.08.91 Patentblatt 91/32**

(84) Benannte Vertragsstaaten:
**BE DE ES FR GB IT NL**

(56) Entgegenhaltungen:
**EP-A- 0 185 918**
**US-A- 4 522 982**

(73) Patentinhaber: **HOECHST AKTIENGESELLSCHAFT**
**Postfach 80 03 20**
**W-6230 Frankfurt am Main 80(DE)**

(72) Erfinder: **Kaminsky, Walter, Prof. Dr.**
**Buschweg 52**
**W-2080 Pinneberg(DE)**
Erfinder: **Buschermöhle, Maria, Dr.**
**Julius Brecht-Str. 3**
**W-2000 Hamburg 52(DE)**

**EP 0 269 987 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur Herstellung eines Stereoblockpolymers mit langen isotaktischen Sequenzen.

Stereoblockpolymere sind Homopolymere, in deren Molekülketten isotaktische Sequenzen mit entgegengesetzter Konfiguration miteinander abwechseln.

Bekannt ist ein Verfahren zur Herstellung von blockartig aufgebautem Polypropylen, in welchem die isotaktischen Sequenzen mehr als 2 Monomereinheiten lang sind (vgl. US-PS 4 522 982). Als Katalysator wird ein Metallocen eines Metalls der Gruppe 4b, 5b oder 6b des Periodensystems, beispielsweise Titan, Vanadium oder Hafnium, insbesondere Titan, eingesetzt. Diese Metallocen ist eine Mono-, Di-oder Tricyclopentadienyl- oder substituierte Cyclopentadienyl-Metallverbindung. Als Cokatalysator dient ein Aluminoxan.

Allerdings sind die bevorzugt verwendeten Titanocene in verdünnter Lösung nicht ausreichend thermisch stabil, um in einem technischen Verfahren verwendbar zu sein. Außerdem werden bei diesem Verfahren Produkte mit größerer Länge der isotaktischen Sequenzen (n größer 6) nur bei sehr tiefer Temperatur (-60 °C) erhalten. Schließlich müssen die Cokatalysatoren in vergleichsweise hoher Konzentration eingesetzt werden, um eine ausreichende Kontaktausbeute zu erreichen, was dazu führt, daß die im Polymerprodukt enthaltenen Katalysatorreste in einem separaten Reinigungsschritt entfernt werden müssen.

Weiterhin ist bekannt, daß beim Einsatz eines Katalysators auf Basis Bis-Cyclopentadienylverbindungen des Zirkons und Aluminoxan beim Polymerisieren von Propylen nur ataktisches Polymer erhalten wird (vgl. EP-A 69951).

Schließlich kann mittels löslicher stereorigider chiraler Zirkonverbindungen hochisotaktisches Polypropylen hergestellt werden (vgl. EP-A 185 918).

Die Aufgabe bestand darin, ein Polymerisationsverfahren zu finden, bei welchem Stereoblockpolymere mit großer Länge der Sequenzen bei günstigeren Prozesstemperaturen und niedrigeren Alumoxan-Konzentration in hoher Ausbeute erhalten werden.

Es wurde gefunden, daß die Aufgabe gelöst werden kann, wenn als Katalysator eine Metallocenverbindung mit durch chirale Gruppen substituierten Cyclopentadienylresten und ein Alumoxan verwendet wird.

Somit betrifft die Erfindung ein Verfahren zur Herstellung eines 1-Olefin-Stereoblockpolymers durch Polymerisation eines 1-Olefins der Formel $R\text{-}CH=CH_2$, worin R eine Alkylgruppe mit 1 bis 28 C-Atomen ist, bei einer Temperatur von -60 bis 100 °C, bei einem Druck von 0,5 bis 60 bar, in Lösung, in Suspension oder in der Gasphase, in Gegenwart eines Katalysators, welcher aus einer Übergangsmetallverbindung und einem Alumoxan besteht, dadurch gekennzeichnet, daß die Polymerisation in Gegenwart eines Katalysators durchgeführt wird, dessen Übergangsmetallverbindung eine Metallocenverbindung der Formel I

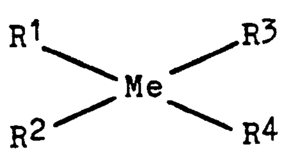

(I),

worin

$R^1$ und $R^2$ gleich oder verschieden sind und ein Halogenatom, $C_1$- bis $C_{10}$-Alkyl, $C_6$- bis $C_{10}$-Aryl, $C_2$- bis $C_{10}$-Alkenyl, $C_7$- bis $C_{40}$-Arylalkyl, $C_7$- bis $C_{40}$-Alkylaryl oder $C_8$- bis $C_{40}$-Alkenylaryl bedeuten,

$R^3$ und $R^4$ gleich oder verschieden sind und einen substituierten Cyclopentadienylrest bedeuten, wobei dieser Rest ein oder mehrere Chiralitätszentren enthält und durch Umsetzung von Alkalicyclopentadienid mit einem para Toluolsulfonsäureester eines chiralen Alkohols erhaltbar ist und Me Titan oder Zirkon ist, und wobei das Alumoxan ein solches der Formel II

$$Al_2OR^5_4\left[Al(R^5)-O\right]_n \qquad (II)$$

für den linearen Typ und/oder ein solches der Formel III

$$[Al(R^5)-O]_{n+2} \qquad (III)$$

für den cyclischen Typ ist, wobei in den Formeln II und III $R^5$ Methyl, Ethyl oder Isobutyl bedeutet und n eine ganze Zahl von 4 bis 20 ist,
und das nach diesem Verfahren hergestellte Stereoblockpolymer.

In Formel I ist Me vorzugsweise Zirkon und $R^1$ und $R^2$ bedeuten vorzugsweise ein Halogenatom oder eine Alkylgruppe, vorzugsweise Methyl, insbesondere ein Chloratom. $R^3$ und $R^4$ sind durch Umsetzung eines Alkalicyclopentadienids, vorzugsweise Natriumcyclopentadienids, und beispielsweise einem para Toluolsulfonsäureester der folgenden chiralen Alkohole entstanden:
Thujylalkohol; Neothujylalkohol; cis-, trans-Sabinol; 2,5-Dimethyl-4-vinyl-2,5-hexadien-1-ol; Lavandulol; Isopulegol; Neoisopulegol; cis-, trans-Pulegol; Isomenthol; Neomenthol; Neoisomenthol; Menthol; cis-, trans-$\Delta^{1(7)}$-p-Menthenol-(2); cis-, trans-$\Delta^{1(7)8}$-p-Menthadienol-(2); Dihydrocarveol; Neodihydrocarveol; Isodihydrocarveol; Neoisodihydrocarveol; Carvomenthol; Neoisocarvomenthol; Isocarvomenthol; Neocarvomenthol; Perilla-Alkohol; Phellandrol; Butanol-(2); Cycloisolongifolol; Isolongifolol; 2-Methylbutanol; Octanol-(2); Pentanol-(2); Phenylethanol; Hydroxycitronellal; Hydroxycitronellol; cis-, trans-Myrtenol; 2,6-Dimethylocten-(3)-diol-(2,8); 2,6-Dimethylocten-(1)-diol-(3,8); Dihydrocitronellol; Citronellol; 2,6-Dimethyloctadien-(2,7)-ol-(4); 2,6-Dimethyloctadien-(1,7)-ol-(3); $\Delta^{1,8}$-p-Menthadienol-(9); $\Delta^1$-p-Menthenol-(9); cis-, trans-Sobrerol; cis-m-Methanol-(5); $\Delta^{4/10}$-Carenol-(5); $\Delta^3$-Carenol-(2); Caranol-(3); Isocaranol-(3); Neocaranol-(3); Neoisocaranol-(3); α-, β-Fenchol; Borneol; Isoborneol; cis-, trans-Myrtanol; Neoverbanol; Neoisoverbanol; cis-, trans-Chrysanthenol; cis-, trans-Verbenol; Isoverbanol; cis-, trans-Pinocarveol; Pinocampheol; Neopinocampheol; Isopinocampheol; Neoisopinocampheol; Methylnopinol.

Von diesen chiralen Alkoholen werden die cyclischen bevorzugt eingesetzt. Besonders bevorzugt ist Neomenthol. Somit ist die besonders bevorzugt verwendete Metallocenverbindung Bis-neomenthylcyclopentadienylzirkoniumdichlorid.

Die Herstellung dieser Verbindungen kann beispielsweise auf folgende Weise erfolgen.

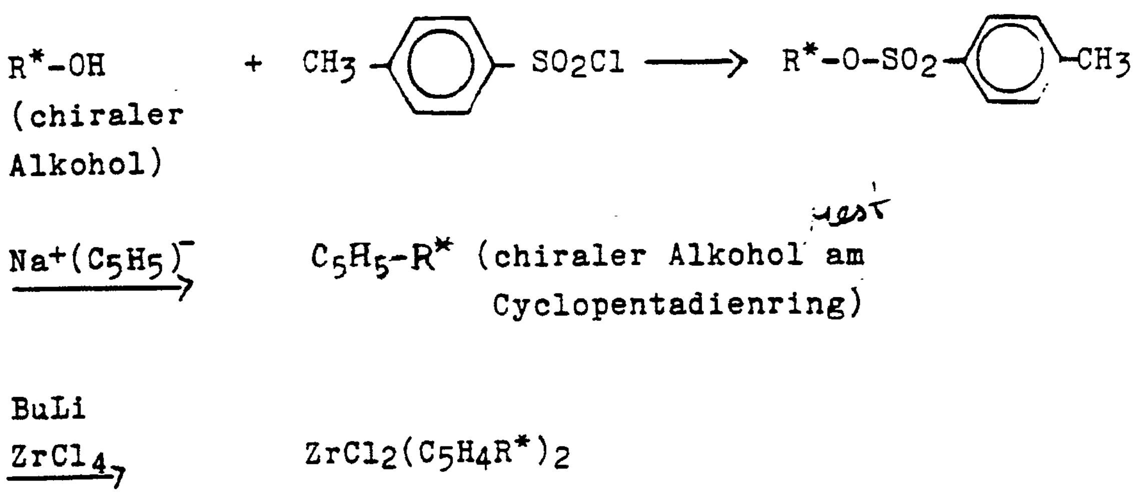


Die zweite Komponente des erfindungsgemäßen Katalysators ist ein Alumoxan der Formel II

$$Al_2OR^5_4[Al(R^5)-O]_n \qquad (II)$$

für den linearen Typ und/oder der Formel III

$$\left[Al(R^5)-O\right]_{n+2} \qquad (III)$$

für den cyclischen Typ. In diesen Formeln bedeuten $R^5$ Methyl, Ethyl oder Isobutyl, bevorzugt Methyl, und n eine ganze Zahl von 4 bis 20, bevorzugt 10 bis 16.

Das Alumoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls und das Wasser jeweils in kleinen Portionen in eine vorgelegte größere Menge eines inerten Lösungsmittels eingetragen werden und zwischendurch das Ende der Gasentwicklung jeweils abgewartet wird.

Bei einem weiteren Verfahren wird fein gepulvertes Kupfersulfat-pentahydrat in Toluol aufgeschlämmt und in einem Glaskolben unter Inertgas bei etwa -20° C mit soviel Aluminiumtrialkyl versetzt, daß je 4 Al-Atome etwa 1 Mol $CuSO_4.5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30° C ansteigt. Anschließend wird das im Toluol gelöste Alumoxan von dem Kupfersulfat abfiltriert und das Toluol unter Vakuum abdestilliert. Es wird angenommen, daß bei diesem Herstellungsverfahren die niedermolekularen Alumoxane unter Abspaltung von Alminiumtrialkyl zu höheren Oligomeren kondensieren.

Schließlich erhält man Alumoxane, wenn man bei einer Temperatur von -20 bis 100° C in einem inerten aliphatischen oder aromatischen Lösungsmittel gelöstes Aluminiumtrialkyl mit kristallwasserhaltigen Aluminiumsalzen, vorzugsweise Aluminiumsulfat, zur Reaktion bringt. Dabei beträgt das Volumenverhältnis zwischen Lösungsmittel und dem verwendeten Aluminiumalkyl 1:1 bis 50:1 - vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden bevorzugt jene verwandt, die einen hohen Gehalt an Kristallwasser aufweisen. Besonders bevorzugt ist Aluminiumsulfat-Hydrat, vor allem die Verbindungen $Al_2(SO_4)_3 \cdot 18H_2O$ und $Al_2(SO_4)_3 \cdot 16H_2O$ mit dem besonders hohen Kristallwassergehalt von 16 bzw. 18 Mol $H_2O$/Mol $Al_2(SO_4)_3$.

Der erfindungsgemäß zu verwendende Katalysator wird zur Polymerisation von 1-Olefinen der Formel $R\text{-}CH=CH_2$, in der R einen Alkylrest mit 1 bis 28 C-Atomen, vorzugsweise 1 bis 10 C-Atomen, insbesondere einem C-Atom bedeutet, eingesetzt, beispielsweise Propylen, Buten-(1), Hexen-(1), 4-Methylpenten-(1), Octen-(1). Besonders bevorzugt ist Propylen.

Die Polymerisation wird in bekannter Weise in Lösung, in Suspension oder in der Gasphase, kontinuierlich oder diskontinuierlich, ein- oder mehrstufig bei einer Temperatur von -60 bis 100° C, vorzugsweise -20 bis 80° C, durchgeführt. Der Druck beträgt 0,5 bis 60 bar. Bevorzugt ist die Polymerisation in dem technisch besonders interessanten Druckbereich von 5 bis 60 bar.

Dabei wird die Metallocenverbindung in einer Konzentration, bezogen auf Titan bzw. Zirkon, von $10^{-3}$ bis $10^{-7}$, vorzugsweise $10^{-4}$ bis $10^{-6}$ Mol Ti bzw. Zr pro Liter Lösungsmittel bzw. pro Liter Reaktorvolumen angewendet. Das Alumoxan wird in einer Konzentration von $10^{-4}$ bis $10^{-1}$Mol, vorzugsweise $10^{-3}$ bis $10^{-2}$ Mol pro Liter Lösungsmittel bzw, pro Liter Reaktorvolumen verwendet. Prinzipiell sind aber auch höhere Konzentrationen möglich.

Die Polymerisation wird in einem für das Ziegler-Niederdruckverfahren gebräuchlichen inerten Lösungsmittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol. Schließlich kann auch das zu polymerisierende Monomere als Lösungs- oder Suspensionsmittel eingesetzt werden. Das Molekulargewicht des Polymerisats kann in bekannter Weise geregelt werden; vorzugsweise wird dazu Wasserstoff verwendet.

Gegenüber dem bekannten Stand der Technik zeichnet sich das erfindungsgemäße Verfahren dadurch aus, daß die bevorzugt verwendeten Zirkonverbindungen in verdünnter Lösung sehr temperaturstabil sind, so daß sie auch bei Temperaturen bis 80° C eingesetzt werden können. Außerdem können die als Cokatalysatoren dienenden Alumoxane in geringerer Konzentration als bisher zugesetzt werden. Schließlich ist es nunmehr möglich, Stereoblockpolymere mit langen isotaktischen Sequenzen bei höheren Temperaturen herzustellen, dadurch wird der Aufwand an Energie, die Prozeßtemperatur aufrechtzuerhalten, verringert.

Beispiel 1

Ein trockener, mit Argon befüllter Glasautoklav wurde bei -40° C mit 250 ml trockenem Toluol, 300 mg Methylalumoxan mit einem Oligomerisierungsgrad von n = 16 und 45 g Propylen gefüllt. In diese Lösung wurde $2x10^{-5}$ mol Bis-neomenthylcyclopentadienylzirkoniumdichlorid zugegeben.

Nach einer Polymerisationszeit von 65 Stunden wurde die Reaktion abgebrochen, das Polymer mit Ethanol ausgefällt und im Vakuum getrocknet.
Ausbeute 51 g Polypropylen, Aktivität 2,6 kg/mmol, viskosimetrisch bestimmte, mittlere Molmasse 360 000. Die $^{13}C$-NMR-Analyse ergab eine Länge der isotaktischen Sequenzen von $n_c$ = 6,2; $M_w/M_n$ = 2.

Beispiel 2

Es wurde wie in Beispiel 1 gearbeitet, jedoch bei -20° C polymerisiert. Polymerisationszeit 20 Stunden. Ausbeute 26 g PP, Aktivität 1,3 kg/mmol, mittlere Molmasse 82 000. Länge der isotaktischen Sequenzen $n_c$ = 4,9, $M_w/M_n$ = 2,3.

Beispiel 3

Beispiel 1 wurde wiederholt, jedoch wurde bei 0° C polymerisiert. Polymerisationszeit 20 Stunden. Ausbeute 77 g PP. Aktivität 3,9 kg/mmol, mittlere Molmasse 16 000. Länge der isotaktischen Sequenzen $n_c$ = 4,6; $M_w/M_n$ = 1,9

Beispiel 4

Es wurde wie in Beispiel 3 gearbeitet, jedoch bei +20° C polymerisiert. Polymerisationszeit 4 Stunden. $M_w/M_n$ = 2,0. Ausbeute 73 g PP, Aktivität 3,6 kg/mmol, Länge der isotaktischen Sequenz: $n_c$ = 4,6.

Die Zusammenfassung der Beispiele zeigt die folgende Tabelle:

| Beispiel Nr. | Aktivität kg/mmol | Kontaktzeit-ausbeute kg/mmol.h | $M_w/M_n$ | Länge der isot. Sequenzen $n_c$ | Temp. (°C) |
|---|---|---|---|---|---|
| 1 | 2,6 | 0,040 | 2,5 | 6,2 | -40 |
| 2 | 1,3 | 0,065 | 2,3 | 4,9 | -20 |
| 3 | 3,9 | 0,195 | 1,9 | 4,6 | -0 |
| 4 | 3,6 | 0,900 | 2,0 | 4,6 | +20 |

**Patentansprüche**

1. Verfahren zur Herstellung eines 1-Olefin-Stereoblockpolymers durch Polymerisation eines 1-Olefins der Formel R-CH=$CH_2$, worin R eine Alkylgruppe mit 1 bis 28 C-Atomen ist, bei einer Temperatur von -60 bis 100° C, bei einem Druck von 0,5 bis 60 bar, in Lösung, in Suspension oder in der Gasphase, in Gegenwart eines Katalysators, welcher aus einer Übergangsmetallverbindung und einem Alumoxan besteht, dadurch gekennzeichnet, daß die Polymerisation in Gegenwart eines Katalysators durchgeführt wird, dessen Übergangsmetallverbindung eine Metallocenverbindung der Formel I

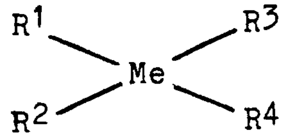

(I),

worin

$R^1$ und $R^2$ gleich oder verschieden sind und ein Halogenatom, $C_1$- bis $C_{10}$-Alkyl, $C_6$- bis $C_{10}$-Aryl, $C_2$- bis $C_{10}$-Alkenyl, $C_7$- bis $C_{10}$-Arylalkyl, $C_7$- bis $C_{40}$ -Alkylaryl oder $C_8$- bis $C_{40}$-Alkenylaryl bedeuten,
$R^3$ und $R^4$ gleich oder verschieden sind und einen substituierten Cyclopentadienylrest bedeuten, wobei dieser Rest ein oder mehrere Chiralitätszentren enthält und durch Umsetzung von Alkalicyclopentadienid mit einem para Toluolsulfonsäureester eines chiralen Alkohols erhaltbar ist und Me Titan oder Zirkon ist, und wobei das Alumoxan ein solches der Formel II

$$Al_2OR^5_4\left[Al(R^5)-O\right]_n \qquad (II)$$

für den linearen Typ und/oder ein solches der Formel III

$$\left[Al(R^5)-O\right]_{n+2} \qquad (III)$$

für den cyclischen Typ ist, wobei in den Formeln II und III $R^5$ Methyl, Ethyl oder Isobutyl bedeutet und n eine ganze Zahl von 4 bis 20 ist.

2. Verfahren nach Anspruch 1, dadurch gekennzeichnet, daß das 1-Olefin Propylen ist.

3. Verfahren nach Anspruch 1, dadurch gekennzeichnet, daß die Metallocenverbindung eine Verbindung des Zirkons ist.

4. Verfahren nach Anspruch 1, dadurch gekennzeichnet, daß die Metallocenverbindung Bis-neomenthylcyclopentadienylzirkoniumdichlorid ist.

## Claims

1. A process for the preparation of a 1-olefin stereo-block polymer through polymerization of a 1-olefin of the formula $R-CH=CH_2$ in which R is an alkyl group having 1 to 28 carbon atoms, at a temperature of -60 to 100 °C, at a pressure of 0.5 to 60 bar, in solution, in suspension or in the gas phase, in the presence of a catalyst which consists of a transition metal compound and an alumoxane, which comprises carrying out the polymerization in the presence of a catalyst whose transition metal compound is a metallocene compound of the formula I

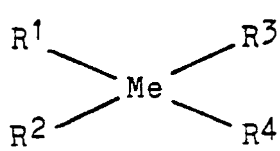

(I)

in which
$R^1$ and $R^2$ are identical or different and denote a halogen atom, $C_1$- to $C_{10}$-alkyl, $C_6$- to $C_{10}$-aryl, $C_2$- to $C_{10}$-alkenyl, $C_7$- to $C_{40}$-arylalkyl, $C_7$- to $C_{40}$-alkylaryl or $C_8$- to $C_{40}$-alkenylaryl,
$R^3$ and $R^4$ are identical or different and denote a substituted cyclopentadienyl radical, where this radical contains one or more chiral centers and may be obtained by reaction of an alkali metal cyclopentadienide with a paratoluenesulfonic ester of a chiral alcohol, and where Me is titanium or zirconium, and where the alumoxane is one of the formula II

$$Al_2OR_4^5\left[Al(R^5)-O\right]_n \qquad (II)$$

for the linear type and/or one of the formula III

$$\left[Al(R^5)-O\right]_{n+2} \qquad (III)$$

for the cyclic type, where, in the formulae II and III,
$R^5$ denotes methyl, ethyl or isobutyl, and n is an integer from 4 to 20.

**2.** The process as claimed in claim 1, wherein the 1-olefin is propylene.

**3.** The process as claimed in claim 1, wherein the metallocene compound is a compound of zirconium.

**4.** The process as claimed in claim 1, wherein the metallocene compound is bis-neomenthylcyclopentadienylzirconium dichloride.

**Revendications**

**1.** Procédé pour préparer un polymère stéréoséquencé d une α-oléfine par polymérisation d'une α-oléfine répondant à la formule $R-CH=CH_2$ dans laquelle R représente un alkyle contenant de 1 à 28 atomes de carbone, à une température de -60 a 100 °C, sous une pression de 0,5 à 60 bar, en solution, en suspension ou en phase gazeuse, en présence d'un catalyseur constitué d'un composé d'un métal de transition et d'un aluminoxane, procédé caractérisé en ce qu'on effectue la polymérisation en présence d'un catalyseur dont le composé de métal de transition est un métallocène répondant à la Formule I :

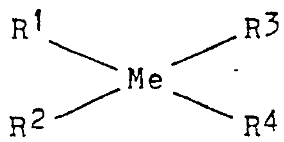

(I)

dans laquelle

| | |
|---|---|
| $R^1$ et $R^2$ | sont identiques ou différents et représentent chacun, un atome d'halogène, un alkyle en $C_1$- $C_{10}$, un aryle en $C_6$-$C_{10}$, un alcényle en $C_2$-$C_{10}$, un arylalkyle en $C_7$-$C_{40}$, un alkylaryle en $C_7$-$C_{40}$ ou un alcénylaryle en $C_8$-$C_{40}$, |
| $R^3$ et $R^4$ | sont identiques ou différents et représentent chacun un radical cyclopentadiényle substitué, ce radical contenant un ou plusieurs centres de chiralité et pouvant être obtenu par réaction d'un cyclopentadiénure de métal alcalin avec p-toluène-sulfonate d'un alcool chiral, et |
| Me | représente le titane ou le zirconium, |

et dont l'aluminoxane est un composé de formule II :

$$Al_2OR_4^5\left[Al(R^5)-O\right]_n \qquad (II)$$

pour le type linéaire et/ou un composé de formule III :

$$\left[Al(R^5)-O\right]_{n+2} \qquad (III)$$

pour le type cyclique, formules dans lesquelles :

$R^5$ représente un radical méthyle, éthyle ou isobutyle

n et désigne un nombre entier de 4 à 20.

**2.** Procédé selon la revendication 1 caractérisé en ce que l'α-oléfine est le propylène.

**3.** Procédé selon la revendication 1 caractérisé en ce que le métallocène est un composé du zirconium.

**4.** Procédé selon la revendication 1 caractérisé en ce que le métallocène est le dichlorure de bis-néomenthylcyclopentadiényl-zirconium.